# EUROPEAN PATENT SPECIFICATION

(11) **EP 2 261 058 B1**
(45) Date of publication and mention of the grant of the patent: **18.01.2012**
(21) Application number: 10005772.8
(22) Date of filing: 02.06.2010
(51) Int. Cl.: B60C 9/00

(54) **Tire cord and pneumatic tire including the same**
Reifencord und pneumatischer Reifen damit
Corde pour pneu et pneu l'incluant

(30) Priority: 12.06.2009 JP 2009141688
(43) Date of publication of application: 15.12.2010
(73) Proprietor: Sumitomo Rubber Industries, Ltd., Hyogo-ken (JP)
(72) Inventor: Matsunaga, Satoshi, Kobe-shi Hyogo 651-0072 (JP)
(74) Representative: Manitz, Finsterwald & Partner GbR

(56) References cited:
- EP-A1- 0 133 205
- EP-A1- 0 329 590
- EP-A2- 2 017 093
- WO-A1-80/00069

## Description

### Background of the invention

The present invention relates to a tire cord and a pneumatic tire including the same, more particularly to a structure of an aramid fiber cord capable of increasing the initial elongation of the tire cord.

In general, a pneumatic tire is provided with a tread reinforcing layer disposed radially outside the carcass.

As well known in the art, the term "tread reinforcing layer" encompass: a layer so called "band" composed of reinforcing cord or cords laid at small angles (for example less than 10 degrees) with respect to the tire circumferential direction; and a layer so called "belt" or "breaker" composed of reinforcing cords laid at relatively large angles with respect to the tire circumferential direction. For example, in Japanese Patent Application Publication No.JP-2007-308101A, a band composed of steel cords or aramid cords is disclosed.

On the other hand, a pneumatic tire is usually formed by vulcanizing a raw tire in a mold. During vulcanizing the raw tire, the inside of the raw tire is pressurized in order to press the outer surface of the raw tire onto the inner surface of the mold.

Therefore, during vulcanizing a raw tire, if the stretch of the tread reinforcing layer is less, there is a possibility that the tread portion of the raw tire in the mold can not fully expand because the tread reinforcing layer, especially the band hinders the expansion of the tread portion. Thus, it becomes difficult to fully press the raw tread rubber onto the inner surface of the mold. In other words, it becomes difficult to provide a desired tread profile for the pneumatic tire.

If low modulus cords are employed in the tread reinforcing layer, the tire molding accuracy may be improved. But, in the vulcanized tire, it is difficult for the tread reinforcing layer to provide a sufficient reinforcing effect and a tight hoop effect on the tread portion. As a result, there is a possibility that the amount of deformation of the tread portion during running is increased, and the steering stability is deteriorated.

A tire cord having the features of the preamble of claim 1 is known from EP 2017093 A2.

### Summary of the Invention

It is therefore, an object of the present invention to provide a tire cord of which tensile modulus is largely changed at a certain elongation percentage such that the cord shows a relatively low tensile modulus under the above-mentioned certain elongation percentage, but a relatively high tensile modulus above the certain elongation percentage. Therefore, when the tire cord is employed in a tread reinforcing layer such as band, the tread reinforcing layer can stretch appropriately during vulcanization, but after vulcanization, the tread reinforcing layer in the vulcanized tire can not stretch easily, therefore it is possible to improve the tire molding accuracy and provide a sufficient reinforcing effect and a tight hoop effect on the tread portion.

Another object of the present invention to provide a pneumatic tire which has a reinforcing cord layer (e.g. tread band) made of the above-mentioned tire cord, and the tire performance is improved.

According to the present invention, a tire cord comprises: a core made of aramid fibers twisted together at a twist pitch (or lay length); and a sheath composed of at least one strand made of aramid fibers and wound around the core at a winding pitch (or lay length), wherein the winding pitch is less than the twist pitch, and the total fineness (A) of the aramid fibers constituting the core is less than the fineness (B) of the aramid fibers constituting the each strand of the sheath.

According to one aspect of the present invention, a pneumatic tire includes the tire cord as band cords of a tread reinforcing layer.

Preferably, the ratio (A/B) the total fineness (A) to the fineness (B) is set in a range of from 0.2 to 0.6, The ratio (P1/P2) of said twist pitch P1 to the winding pitch P2 is set in a range of from 1.1 to 5.0. The total fineness (A) is set in a range of from 400 to 900 dtex, and the fineness (B) is set in a range of from 1500 to 1900 dtex.

In this application, the "fineness" means the "fineness based on corrected mass" measured according to the Japanese Industrial standard JIS-L1017 (Test Methods for chemical Fiber Tire Cords).

### Brief Description of the Drawings

Fig.1 is a cross sectional view of a pneumatic tire according to the present invention.
Fig.2 is a schematic perspective view of a rubber tape in which a tire cord according to the present invention is embedded.
Fig.3(a) is a schematic cross sectional view of a tire cord according to the present invention.
Fig.3(b) is a schematic side view of the tire cord.
Fig.4 is a graph showing a load-elongation curve of the tire cord according to the present invention together with load-elongation curves of conventional steel cord and aramid cord.
Fig.5 is a graph showing a load-elongation curve of the same tire cord according to the present invention embedded in the pneumatic tire.
Fig.6 is a graph showing the difference (cTf-cTr) in camber thrust between a front wheel and a rear wheel of a motorcycle as a function of the camber angle.

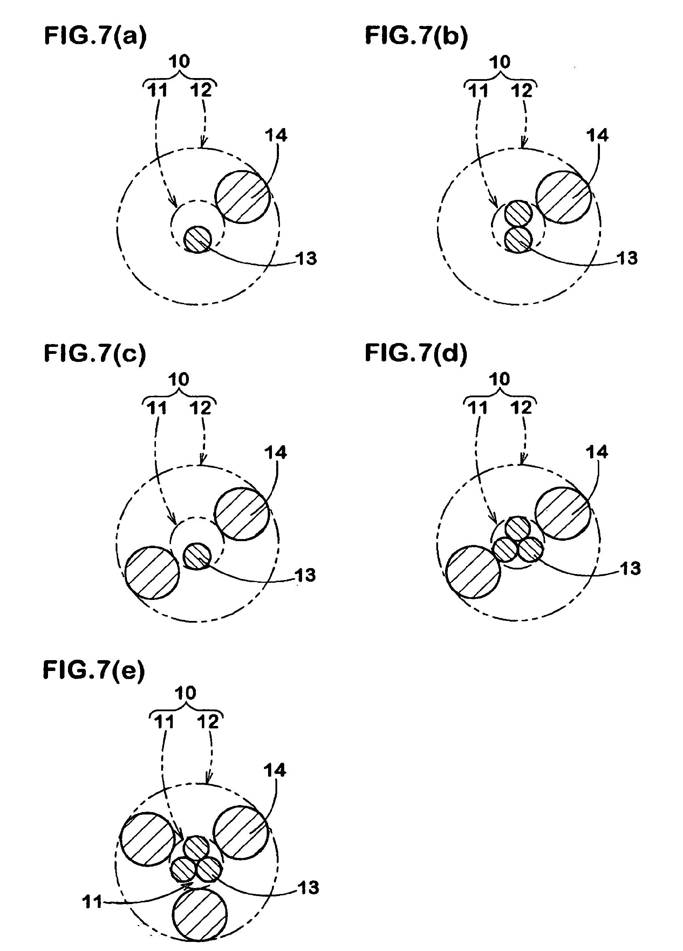

Figs.7(a), 7(b), 7(c), 7(d) and 7(e) are schematic cross sectional views of tire cords according to the present invention used in the undermentioned comparison tests.

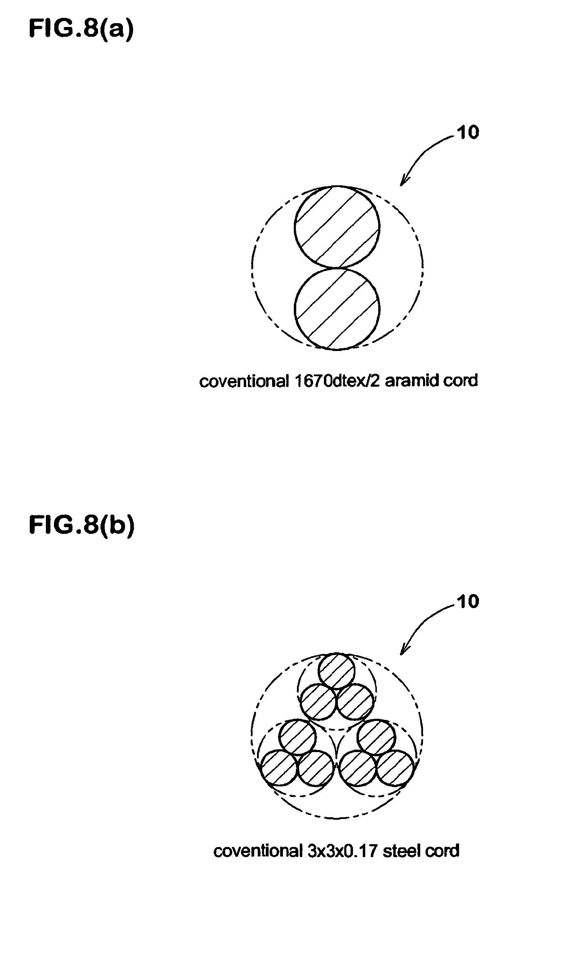

Figs.8(a) and 8(b) are schematic cross sectional views of a conventional aramid cord and a conventional steel cord used in the undermentioned comparison tests.

### Description of the Preferred Embodiments

Embodiments of the present invention will now be described in detail in conjunction with the accompanying drawings.

In the drawings, a pneumatic tire 1 according to the present invention comprises a tread portion 2, a pair of sidewall portions 3, a pair of bead portions 4 with a bead core 5 therein, a carcass 6 extending between the bead portions 4 through the tread portion 2 and sidewall portions 3, and a tread reinforcing layer 7 disposed radially outside the carcass 6 in the tread portion 2.

A tire cord 10 according to the present invention is used in the tread reinforcing layer 7.

In this embodiment, the pneumatic tire 1 is a motorcycle tire, wherein, in the cross section of the tire including the tire rotational axis, the tread portion 2 (inclusive of the carcass 6, tread reinforcing layer 7 and a tread rubber thereon) is curved with a relatively small radius of curvature when compared with the passenger car tires, truck/bus tires and the like, and as a result, the maximum cross section width of the tire lies between the tread edges Te.

The carcass 6 is composed of a single ply 6A extending between the bead portions 4 through the tread portion 2 and sidewall portions 3 and turned up around the bead core 5 in each of the bead portions 4 from the inside to outside of the tire to form a pair of turnup portions 6b and a main portion 6a therebetween.
The carcass ply 6A is made of carcass cords arranged radially at an angle in a range of from 75 to 90 degrees, preferably 80 to 90 degrees with respect to the tire equator c.
For the carcass cords, organic fiber cords, e.g. polyester, nylon, rayon and the like can be used.
A space formed between the carcass ply main portion 6a and turnup portion 6b in each of the bead portions 4 is filled with a bead apex 8 made of a hard rubber.

The tread reinforcing layer 7 comprises at least one (in this example, only one) band ply 7A having a jointless structure formed by helically winding at least one band cord 10 around the radially outside of the carcass. Namely, the band ply 7A is composed of a plurality of windings of at least one band cord 10. The band ply 7A extends across 80 to 95 % of the width of the tread portion between the tread edges Te along the curved tread surface.
In the case of a passenger car tire, the tread reinforcing layer 7 further comprises a breaker composed of at least two cross plies of breaker cords.

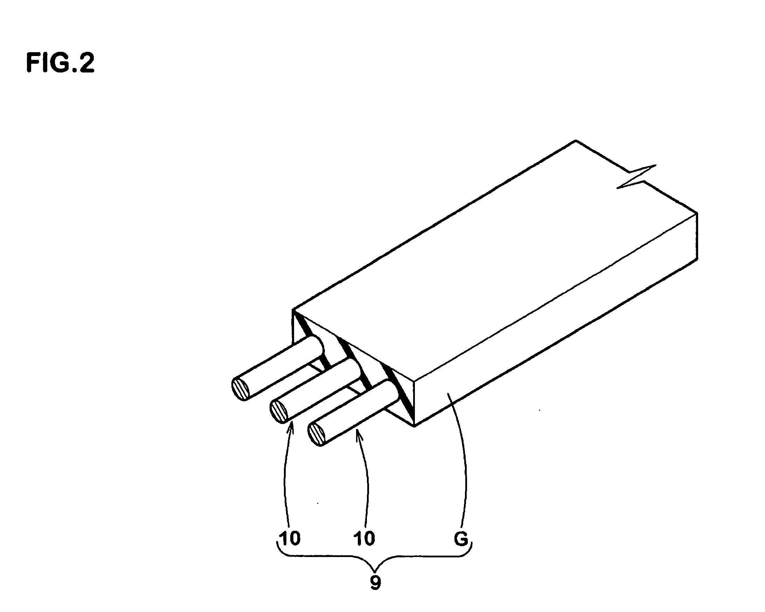

In this embodiment, as shown in Fig.2, one or more band cords 10 are embedded in a raw topping rubber G in a form of a narrow and long raw rubber tape 9.
In a process of building a raw tire, the raw tape 9 is helically wound on the radially outside of the raw carcass in order to form the band ply 7A. The raw tire (not shown) including the raw band ply 7A is vulcanized in a mold.

The tire cord according to the present invention is employed as the band cord 10. For the sake of simplicity, the same reference number "10" is used in the following description of the tire cord according to the present invention.

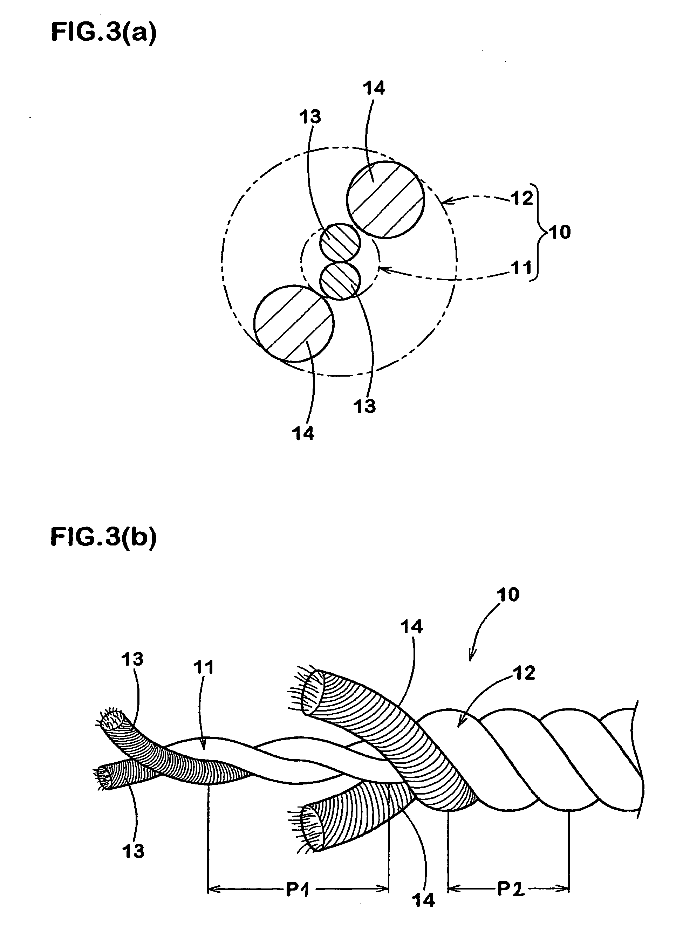

The tire cord 10 is made of a large number of aramid fibers twisted together, and has a core-sheath structure comprising a core 11 and a sheath 12 surrounding the core as shown in Figs.3(a) and 3(b).

The core 11 is made up of a single strand 13 made of aramid fibers twisted together at a twist pitch (or lay length) P1 (mm) or a plurality of strands 13 twisted together at a twist pitch (or lay length) P1 (mm) and made of aramid fibers. In this example, the number of the strands 13 is two.

The sheath 12 is made up of a single strand 14 made of aramid fibers or a plurality of strands 14 each made of aramid fibers, and the strand/strands 14 is/are wound helically around the above-mentioned core 11 at a winding pitch (or lay length) P2 (mm) less than the twist pitch P1 (mm) of the core 11.
In this example, the number of strands 14 is two.

The ratio (P1/P2) of the twist pitch P1 of the core 11 to the winding pitch P2 of the sheath 12 is set in a range of not less than 1.1, preferably not less than 1.2, more preferably not less than 1.5, but not more than 5.0, preferably not more than 4.5, more preferably not more than 4.0.

The total fineness (A) of all of the aramid fibers constituting the core 11 is set to be less than the fineness (B) of the aramid fibers constituting each strand 14 of the sheath 14. More specifically, in the case of the core 11 made up of only one strand 13, the total fineness (A) is equal to the fineness of the strand 13. In the case of the core 11 made up of a plurality of strands 13, the total fineness (A) is the total of fineness of all of the strands 13.

Preferably, the ratio (A/B) of the total fineness (A) to the fineness (B) is set in a range of not less than 0.2, more preferably not less than 0.3, but not more than 0.6, more preferably not more than 0.5.

Preferably, the total fineness (A) of the core 11 is set in a range of not less than 400 dtex, more preferably not less than 500 dtex, still more preferably not less than 600 dtex, but not more than 900 dtex, more preferably not more than 850 dtex, still more preferably not more than 800 dtex.

Preferably, the fineness (B) of each sheath strand 14 is set in a range of not less than 1500 dtex, more preferably not less than 1600 dtex, but not more than 1900 dtex, more preferably not more than 1800 dtex, still more preferably not more than 1700 dtex.

In view of the durability of the tire cord 10 and the structural stability to prevent the looseness of the fibers, it is desirable that the number of the strands 13 constituting the core 11 is same as the number of the strands 14 constituting the sheath 12.

Therefore, when the tire cord 10 is loaded, in the initial stage of elongation of the tire cord 10, most of the cord load is applied to the core 11 because the twist pitch P1. of the core 11 is more than the winding pitch P2 of the sheath strand(s) 14. Meanwhile, the core can elongate easier than the sheath because the total fineness of the core is relatively small. As a result, in the initial stage of elongation of the tire cord 10, the tensile modulus of the tire cord becomes relatively low, and the cord is easier to elongate.

On the other hand, as the tire cord 10 is elongated by increasing the cord load, the winding pitch P2 of the sheath strand(s) 14 increases, namely, the sheath strand(s) becomes more linear. As a result, the cord load is shared from the core 11 to the sheath strand(s) 14 whose fineness is relatively large. Accordingly, the tensile modulus of the tire cord 10 becomes high, and the tire cord becomes hard to further elongate.

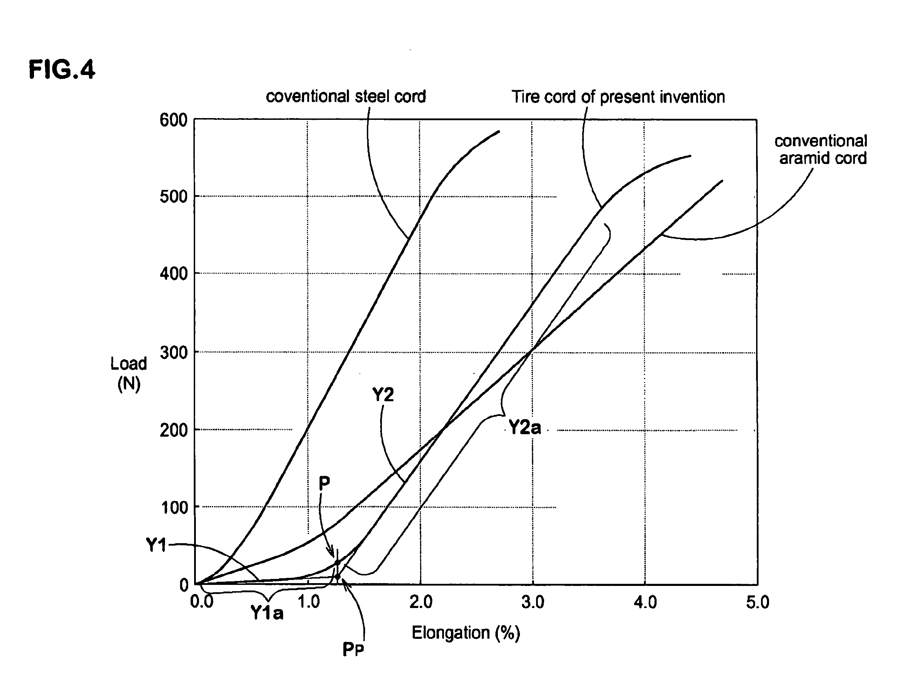

Thus, the load-elongation curve of the tire cord 10 according to the present invention has
a low tensile modulus zone Y1 ranging from the origin 0 to an inflection point P, and
a high tensile modulus zone Y2 ranging from the inflection point P towards the point of rupture of the tire cord
as shown in Fig.4 which shows an exemplary load-elongation curve of the tire cord 10 together with a load-elongation curve of a conventional steel cord whose structure is 3x3x0.17 and a load-elongation curve of a conventional aramid cord whose structure is 1670 dtex/2.

when the load-elongation curve is plotted in an orthogonal coordinate system whose axes are proportional scales, the load-elongation curve of the tire cord 10 has substantially straight parts Y1a and Y2a in the low tensile modulus zone Y1 and the high tensile modulus zone Y2, respectively.

The above-mentioned inflection point P is defined by a point of intersection of the load-elongation curve and a straight line drawn parallel to the axis of the "load" passing through an intersection Pp of an extended line of the straight part Y1a and an extended line of the straight part Y2a.

In the case of the motorcycle tire in this embodiment, in order to fulfill requirements of the tire cord as the band cord, it is desirable that the inflection point P occurs at an elongation (%) of the tire cord which is in a range of from 1.0 to 2.0 %, more preferably 1.0 to 1.5 %.

As explained above, in the tire cord 10 of the present invention, in comparison with the conventional steel cord and aramid cord, the elongation of the tire cord 10 in the initial stage is increased, owing to the low tensile modulus zone Y1. But, after the elongation of the tire cord 10 approaches or reaches to the high tensile modulus zone Y2, the tensile modulus of the tire cord becomes as high as that of the conventional steel cord, therefore, a further elongation of the tire cord is effectively controlled.
Accordingly, the tire cords 10 in this embodiment, namely, the band cords allow the tread reinforcing layer 7 to stretch appropriately during vulcanizing the tire, and the tread portion 2 (or tread rubber) is fully pressed onto the inner surface of the vulcanization mold (not shown). Therefore, the desired tread profile can be obtained, and the molding accuracy and tire uniformity can be increased.

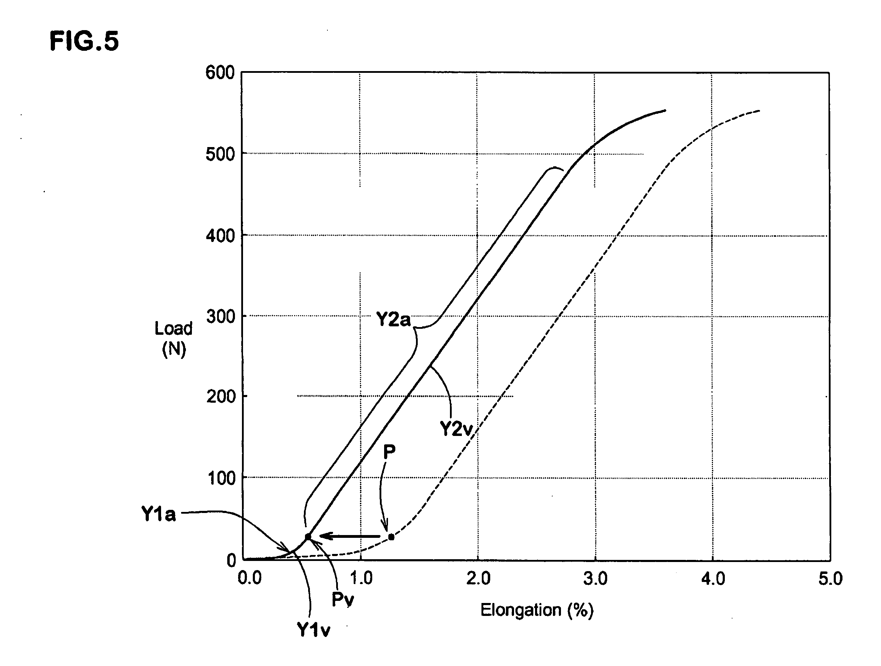

During vulcanizing the tire, the tire cord 10 is elongated by the pressure applied to the inside of the raw tire. such a elongated state of the tire cord 10 is fixed as the rubber becomes hardened. Therefore, after the vulcanization of the tire, the tire cord 10 embedded in the tire 1 shows a load-elongation curve different from the above-mentioned load-elongation curve of the cord alone.
More specifically, as shown in Fig.5, the low tensile modulus zone V1v disappears or becomes very small with the inflection point Pv shifted towards the origin o. In other words, the load-elongation curve becomes almost only the high tensile modulus zone Y2v. As a result, the tread reinforcing layer can provide a tight hoop effect on the tread portion 2 of the pneumatic tire 1, and the steering stability may be improved.

However, if the rigidity of the tread portion 2 is too high, the enveloping effect or ground contact, grip and the like of the tire are deteriorated. Therefore, in order to provide some degree of flexibility for the tread portion 2 while maintain the necessary rigidity, it is desirable that the band cords 10 embedded in the vulcanized tire has the low tensile modulus zone Y1v of a small range such that an inflection point Pv occurs at an elongation in a range of from 0.5 to 1.5 %.
The inflection point Pv is defined as same way as the above-mentioned inflection point P.

If the above-mentioned pitch ratio (P1/P2) is less than 1.1, then, in the initial stage of elongation, the share of cord load with the sheath strand(s) 14 increases, and as a result, the low tensile modulus zone Y1 becomes small and the tensile modulus in this zone becomes high, therefore, the initial elongation of the cord becomes less.
If the pitch ratio (P1/P2) is more than 5.0, there is a possibility that, in the high tensile modulus zone Y2, the core is excessively elongated and broken.

If the above-mentioned fineness ratio (A/B) is less than 0.2, the strength of the core 11 becomes excessively low in comparison with the sheath strand(s) 14, and there is a possibility that the core 11 is broken during tire vulcanization. If the fineness ratio (A/B) is more than 0.6, the rigidity of the core 11 increases, and the initial elongation is decreased. Thus, there is a possibility that the tire molding accuracy is deteriorated.

If the total fineness (A) of the core 11 is less than 400 dtex, the strength of the core 11 decreases, and there is a possibility that the tire cord 10 is broken by the elongation during tire vulcanization. If the total fineness (A) of the core 11 is more than 900 dtex, there is a possibility that the initial elongation in the low tensile modulus zone Y1 becomes insufficient.

If the fineness (B) of the sheath strand 14 is less than 1500 dtex, it becomes difficult to control the stretch of the tread reinforcing layer of the tire during running, therefore, there is a possibility that the steering stability is deteriorated. If the fineness (B) of the sheath strand 14 is more than 1900 dtex, the rigidity of the sheath strands 14 excessively increases, and there is a possibility that ride comfort of the tire is deteriorated.

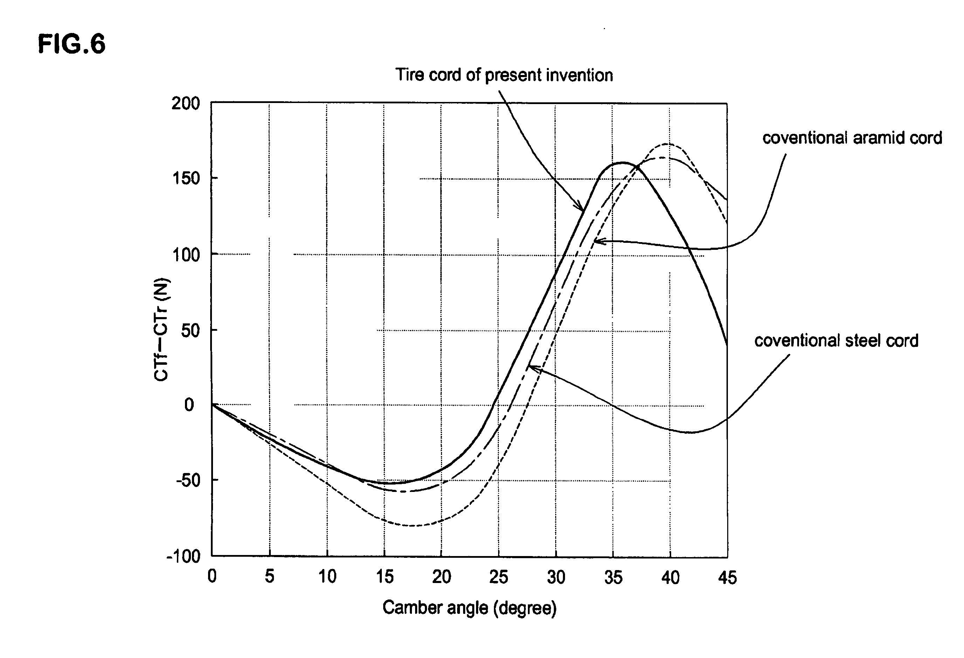

Fig.6 shows the difference (cTf-CTr) between a camber thrust CTf of a front wheel and a camber thrust CTr of a rear wheel as a function of a camber angle (degree).
By employing the tire cord 10 in the tread reinforcing band, in comparison with the conventional steel cord and conventional aramid cord, the enveloping effect of the tire can be improved, and the leaning of the motorcycle to change from straight running to cornering can be made stably and smoothly, and the steering stability can be improved.
Further, there is a possibility that the tire weight and fuel consumption are reduced in comparison with the steel cords.

### Comparison tests

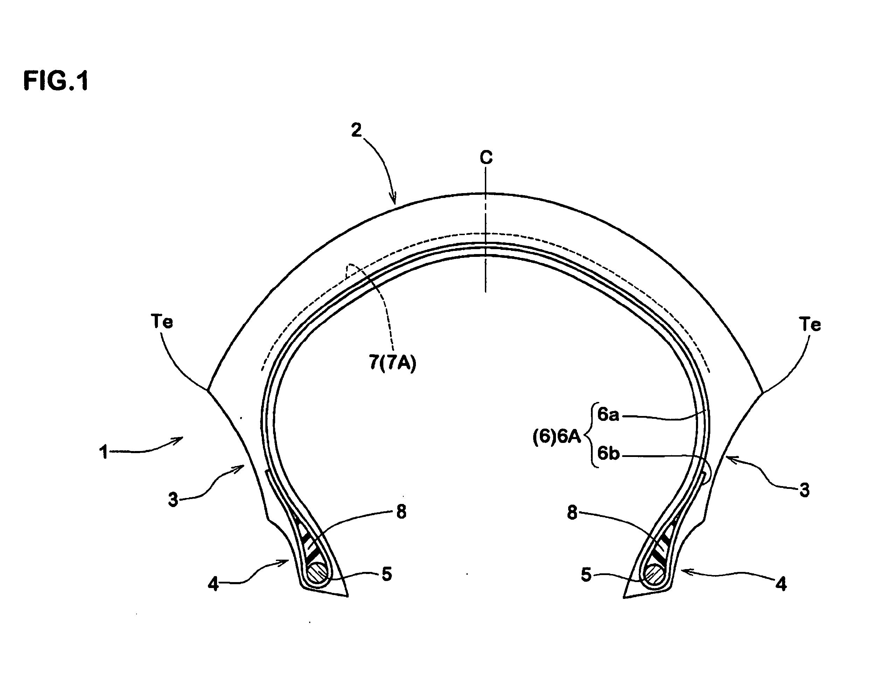

using band cords having specifications shown in Table 1, motorcycle tires was made. Except for the band cords, all of the tires had the same specifications and the same structure shown in Fig.1. Incidentally, the specifications of the band cords shown in Table 1 are those of the cords alone before embedded in the tires, namely, not the specifications of the cords took out from the vulcanized tires.

### Running performance test

Each tire was mounted on a rear wheel of a large-sized motorcycle of 1000 cc displacement. The motorcycle was run a test circuit course, and the steering stability, ground contact feeling, grip, rigid feeling, leaning and ride comfort were evaluated into five ranks by the test rider, wherein the higher rank number is better. The results are indicated in Table 1.

### Rear wheel

tire size: 190/55ZR17
rim size: MT6.00x17
tire pressure: 290 kPa

### Front wheel

tire size: 120/70ZR17
rim size: MT3.50X17
tire pressure: 250kPa

### uniformity test

The radial run out of each tire was measured. The results (average value for 20 samples) are indicated in Table 1 by an index based on Ref.1 being 100, wherein the smaller value is better.

### Tire weight

The weight of each tire is indicated in Table 1 by an index based on Ref.1 being 100, wherein the smaller value is better.

**Table 1**

| Tire | Ref.1 | Ref.2 | Ref.3 | Ref.4 | Ex.1 | Ex.2 | Ex.3 | Ex.4 | Ex.5 | Ex.6 | Ex.7 | Ex.8 | Ex.9 | Ex.10 | Ex.11 | Ex.12 |
|---|---|---|---|---|---|---|---|---|---|---|---|---|---|---|---|---|
| Cord structure (Fig.) | 8(a) *1 | 8(b) *2 | 3(a) | 3(a) | 3(a) | 3(a) | 7(a) | 7(b) | 7(c) | 7(d) | 7(e) | 3(a) | 3(a) | 3(a) | 3(a) | 3(a) |
| Cord material | aramid | steel | aramid | aramid | aramid | aramid | aramid | aramid | aramid | aramid | aramid | aramid | aramid | aramid | aramid | aramid |
| Core number of strand | - | - | 2 | 2 | 2 | 2 | 1 | 2 | 1 | 3 | 3 | 2 | 2 | 2 | 2 | 2 |
| fineness A (dtex) | - | - | 1800 | 880 | 880 | 1600 | 440 | 880 | 440 | 1320 | 1320 | 350 | 950 | 880 | 880 | 880 |
| pitch P1 (mm) | - | - | 0.48 | 0.48 | 0.48 | 0.48 | 0.48 | 0.48 | 0.48 | 0.48 | 0.48 | 0.48 | 0.48 | 0.48 | 0.48 | 0.62 |
| Sheath | | | | | | | | | | | | | | | | |
| number of strand | - | - | 2 | 2 | 2 | 2 | 1 | 1 | 2 | 2 | 3 | 2 | 2 | 2 | 2 | 2 |
| fineness B (dtex) | - | - | 1670 | 1670 | 1670 | 1670 | 1670 | 1670 | 1670 | 1670 | 1670 | 1670 | 1670 | 1400 | 2000 | 1670 |
| pitch P2 (mm) | - | - | 0.32 | 0.60 | 0.32 | 0.32 | 0.32 | 0.32 | 0.32 | 0.32 | 0.32 | 0.32 | 0.32 | 0.32 | 0.32 | 0.20 |
| Ratio A/B | - | - | 1.08 | 0.53 | 0.53 | 0.96 | 0.26 | 0.53 | 0.26 | 0.79 | 0.79 | 0.21 | 0.57 | 0.63 | 0.44 | 0.53 |
| Ratio P1/P2 | - | - | 1.5 | 0.8 | 1.5 | 1.5 | 1.5 | 1.5 | 1.5 | 1.5 | 1.5 | 1.5 | 1.5 | 1.5 | 1.5 | 3.1 |
| Steering stability | 3.65 | 3.65 | 3.60 | 3.65 | 3.75 | 3.70 | 3.75 | 3.75 | 3.80 | 3.80 | 3.80 | 3.80 | 3.80 | 3.80 | 3.80 | 3.80 |
| Ground contact feeling | 3.70 | 3.70 | 3.70 | 3.70 | 3.80 | 3.75 | 3.80 | 3.80 | 3.85 | 3.80 | 3.80 | 3.80 | 3.80 | 3.80 | 3.80 | 3.80 |
| Grip | 3.65 | 3.70 | 3.65 | 3.60 | 3.80 | 3.70 | 3.80 | 3.75 | 3.80 | 3.80 | 3.80 | 3.80 | 3.80 | 3.80 | 3.85 | 3.80 |
| Rigid feeling | 3.10 | 3.20 | 3.20 | 3.10 | 3.35 | 3.20 | 3.30 | 3.25 | 3.30 | 3.30 | 3.30 | 3.35 | 3.30 | 3.25 | 3.35 | 3.35 |
| Leaning | 2.80 | 2.80 | 2.80 | 2.80 | 2.90 | 2.80 | 2.90 | 2.85 | 2.90 | 2.80 | 2.80 | 2.85 | 2.85 | 2.80 | 2.80 | 2.90 |
| Ride comfort | 2.90 | 2.80 | 2.90 | 2.90 | 2.90 | 2.90 | 3.00 | 3.00 | 2.90 | 2.85 | 2.80 | 2.90 | 2.85 | 2.80 | 2.85 | 2.85 |
| Uniformity | 100 | 105 | 98 | 99 | 102 | 100 | 102 | 105 | 105 | 102 | 101 | 101 | 101 | 101 | 101 | 100 |
| Tire weight | 100 | 120 | 100 | 100 | 100 | 100 | 99 | 100 | 100 | 100 | 101 | 100 | 100 | 100 | 100 | 100 |

| | | | | | | | | | | | | | | | | |
|---|---|---|---|---|---|---|---|---|---|---|---|---|---|---|---|---|
| *1)1670dtex/2 *2) 3X3X0.17 mm | | | | | | | | | | | | | | | | |

From the test results, improvements in the steering stability and improvements in the tire uniformity due to the improved molding accuracy are confirmable in the embodiment tires according to the present invention.

As described above, the present invention is suitably applied to band cords, but it is also possible to apply to reinforcing cords of various reinforcing layers such as carcass cords and breaker cords. Further, aside from the motorcycle tires, the present invention can be applied to various tires, for example passenger car tires.

## Claims

1. A tire cord (10) comprising
a core (11) made of aramid fibers twisted together at a twist pitch P1, and
a sheath (12) composed of at least one strand (14) made of aramid fibers and wound around the core at a winding pitch P2, wherein
the total fineness (A) of the aramid fibers constituting the core (11) is less than the fineness (B) of the aramid fibers constituting each said at least one strand (14) of the sheath (12),
**characterized in that**
the winding pitch P2 is less than the twist pitch P1.

2. The tire cord according to claim 1, wherein
the core (11) is made up of a single strand (13) made of said aramid fibers twisted together at said twist pitch P1.

3. The tire cord according to claim 1, wherein
the core (11) is made up of a plurality of strands (13) which are made of said aramid fibers and which are twisted together said twi st pi tch P1.

4. The tire cord according to claim 3, wherein
the number of the strands (13) of the core (11) is equal to
the number of the strands (14) of the sheath (12).

5. The tire cord according to claim 3 or 4, wherein
the number of the strands (13) of the core (11) is two.

6. The tire cord according to any one of claims 1-3, wherein
the number of the strands (14) of the sheath (12) is two.

7. The tire cord according to any one of claims 1-6, wherein
the ratio (A/B) of the total fineness (A) of the core (11) to the fineness (B) of each said at least one strand (14) of the sheath (12) is in a range of from 0.2 to 0.6.

8. The tire cord according to any one of claims 1-7, wherein
the total fineness (A) of the core (11) is in a range of from 400 to 900 dtex, and
the fineness (B) of each said at least one strand (14) of the sheath (12) is in a range of from 1500 to 1900 dtex.

9. The tire cord according to any one of claims 1-8, wherein
the ratio P1/P2 of said twist pitch P1 (mm) to said winding pitch P2 (mm) is in a range of from 1.1 to 5.0.

10. A pneumatic tire (1) comprising a reinforcing layer (7) made of the tire cord (10) as set forth in any one of claims 1-9.

11. The pneumatic tire (1) according to claim 10, wherein
said reinforcing layer (7) is a tread reinforcing layer disposed in a tread portion (2).

12. The pneumatic tire according to claim 11, wherein
in a cross section of the tire (1) including the tire rotational axis, said tread portion (2) is curved with a relatively small radius of curvature so that the maximum cross section width of the tire (1) lies between the edges of the tread portion (2), and
said tread reinforcing layer (7) is a band formed by helically winding the tire cord (10) around a carcass (6).

## Patentansprüche

1. Reifenkord (10), umfassend
einen Kern (11), der aus Aramidfasern hergestellt ist, die mit einer ersten Verdrehungssteigung P1 miteinander verdreht sind, und
einen Mantel (12), der aus zumindest einer Litze (14) zusammengesetzt ist, die aus Aramidfasern hergestellt ist und um den Kern mit einer Wicklungssteigung P2 gewickelt ist, wobei
die Gesamtfeinheit (A) der Aramidfasern, die den Kern (11) bilden, kleiner ist als die Feinheit (B) der Aramidfasern, die eine jede der zumindest einen Litze (14) des Mantels (12) bilden, **dadurch gekennzeichnet, dass**
der Wicklungsteilungsabstand P2 kleiner als die Verdrehungssteigung P1 ist.

2. Reifenkord nach Anspruch 1, wobei
der Kern (11) aus einer einzigen Litze (13) gebildet ist, die aus den Aramidfasern hergestellt ist, die mit der Verdrehungssteigung P1 miteinander verdreht sind.

3. Reifenkord nach Anspruch 1, wobei
der Kern (11) aus einer Vielzahl von Litzen (13) gebildet ist, die aus den Aramidfasern hergestellt sind und die mit der Verdrehungssteigung P1 miteinander verdreht sind.

4. Reifenkord nach Anspruch 3, wobei
die Zahl der Litzen (13) des Kerns (11) gleich der Zahl der Litzen (14) des Mantels (12) ist.

5. Reifenkord nach Anspruch 3 oder 4, wobei
wobei die Zahl der Litzen (13) des Kerns (11) zwei ist.

6. Reifenkord nach einem der Ansprüche 1 bis 3, wobei
die Zahl der Litzen (14) des Mantels (12) zwei ist.

7. Reifenkord nach einem der Ansprüche 1 bis 6, wobei
das Verhältnis (A/B) der Gesamtfeinheit (A) des Kerns (11) zu der Feinheit (B) einer jeden der zumindest einen Litze (14) des Mantels (12) in einem Bereich von 0,2 bis 0,6 liegt.

8. Reifenkord nach einem der Ansprüche 1 bis 7, wobei
die Gesamtfeinheit (A) des Kerns (11) in einem Bereich von 400 bis 900 dtex liegt, und
die Feinheit (B) einer jeden der zumindest einen Litze (14) des Mantels (12) in einem Bereich von 1500 bis 1900 dtex liegt.

9. Reifenkord nach einem der Ansprüche 1 bis 8, wobei
das Verhältnis P1/P2 der Verdrehungssteigung P1 (mm) zu der Wicklungssteigung P2 (mm) in einem Bereich von 1,1 bis 5,0 liegt.

10. Luftreifen (1), der eine Verstärkungsschicht (7) umfasst, die aus dem Reifenkord (10) nach einem der Ansprüche 1 bis 9 hergestellt ist.

11. Luftreifen (1) nach Anspruch 10,
wobei die Verstärkungsschicht (7) eine Laufflächenverstärkungsschicht ist, die in einem Laufflächenabschnitt (2) angeordnet ist.

12. Luftreifen (1) nach Anspruch 11, wobei
in einem Querschnitt des Reifens (1), der die Reifendrehachse umfasst, der Laufflächenabschnitt (2) mit einem relativ kleinen Krümmungsradius gekrümmt ist, sodass die maximale Querschnittsbreite des Reifens (1) zwischen den Rändern des Laufflächenabschnitts (2) liegt, und
die Laufflächenverstärkungsschicht (7) ein Band ist, das durch wendelförmiges Wickeln des Reifenkords (10) um eine Karkasse (6) herum gebildet ist.

## Revendications

1. Câblé de pneumatique (10) comprenant
un noyau (11) réalisé de fibres aramides torsadées ensemble avec un pas de torsade P1, et
une gaine (12) composée d'au moins un brin (14) réalisé avec des fibres aramides et enroulé autour du noyau avec un pas d'enroulement P2, dans lequel
la finesse totale (A) des fibres aramides constituant le noyau (11) est inférieure à la finesse (B) des fibres aramides constituant chacun desdits au moins un brin (14) de la gaine (12),
**caractérisé en ce que**
le pas d'enroulement P2 est inférieur au pas de torsade P1.

2. Câblé de pneumatique selon la revendication 1, dans lequel le noyau (11) est constitué d'un brin unique (13) réalisé avec lesdites fibres aramides torsadées ensemble avec ledit pas de torsade P1.

3. Câblé de pneumatique selon la revendication 1, dans lequel le noyau (11) est constitué d'une pluralité de brins (13) qui sont réalisés avec lesdites fibres aramides et qui sont torsadés ensemble avec ledit pas de torsade P1.

4. Câblé de pneumatique selon la revendication 3, dans lequel le nombre de brins (13) du noyau (11) est égal au nombre de brins (14) de la gaine (12).

5. Câblé de pneumatique selon la revendication 3 ou 4, dans lequel le nombre des brins (13) du noyau (11) est égal à deux.

6. Câblé de pneumatique selon l'une quelconque des revendications 1 à 3, dans lequel
le nombre des brins (14) de la gaine (12) est égal à deux.

7. Câblé de pneumatique selon l'une quelconque des revendications 1 à 6, dans lequel
le rapport (A/B) de la finesse totale (A) du noyau (11) sur la finesse (B) de chacun desdits au moins un brin (14) de la gaine (12) est dans une plage de 0,2 à 0,6.

8. Câblé de pneumatique selon l'une quelconque des revendications 1 à 7, dans lequel
la finesse totale (A) du noyau (11) est dans une plage de 400 à 900 dtex, et
la finesse (B) de chacun desdits au moins un brin (14) de la gaine (12) est dans une plage de 1500 à 1900 dtex.

9. Câblé de pneumatique selon l'une quelconque des revendications 1 à 8, dans lequel
le rapport P1/P2 dudit pas de torsade P1 (mm) sur ledit pas d'enroulement P2 (mm) est dans une plage de 1,1 à 5,0.

10. Bandage pneumatique (1) comprenant une couche de renforcement (7) réalisée avec le câblé de pneumatique (10) selon l'une quelconque des revendications 1 à 9.

11. Bandage pneumatique (1) selon la revendication 10, dans lequel ladite couche de renforcement (7) est une couche de renforcement de roulement disposée dans une portion formant bande de roulement (2).

12. Bandage pneumatique selon la revendication 11, dans lequel dans une section transversale du pneumatique (1) incluant l'axe de rotation du pneumatique, ladite portion formant bande de roulement (2) est incurvée avec un rayon de courbure relativement petit de telle sorte que la largeur de section transversale maximum du pneumatique (1) située entre les bords de la portion formant bande de roulement (2), et ladite couche de renforcement (7) est une bande formée en enroulant en hélice le câblé de pneumatique (10) autour d'une carcasse (6).
